# EUROPÄISCHE PATENTANMELDUNG

(11) **EP 1 716 742 A1**
(43) Veröffentlichungstag der Anmeldung: **02.11.2006**
(21) Anmeldenummer: 06008582.6
(22) Anmeldetag: 26.04.2006
(51) Int. Cl.: A01D 78/10, A01D 80/00

(54) **Vorrichtung zur Futterernte**

(30) Priorität: 27.04.2005 DE 102005019996
(71) Anmelder: CLAAS Saulgau GmbH, 88348 Bad Saulgau (DE)
(72) Erfinder: Altepost, Helmut, 48477 Härtel-Riesenbeck (DE); Geng, Manfred, 88348 Bad Saulgau (DE)
(74) Vertreter: Eisele, Otten, Roth & Dobler

(57) **Zusammenfassung**

Es wird eine Vorrichtung zur Futterernte mit einem wenigstens einen Fahrersitz (41) und Bedienelemente (42) umfassenden Arbeitsplatz (40) für eine Bedienperson und mit einer Futtererntemaschine (1), die eine Arbeitsstellung mit einem oder mehreren ausgefahrenen, Rechwerkzeugen (2,3,4) für eine entsprechend große Arbeitsbreite und eine Transportstellung mit einem oder mehreren eingefahrenen Rechwerkzeugen (2,3,4) für eine entsprechend kleine Transportbreite aufweist, wobei die Position des Arbeitsplatzes (40) für die Bedienperson in der Transportstellung bezogen auf die Fahrtrichtung (F) während des Transports vor wenigstens einem Rechwerkzeug (2,3,4) angeordnet ist und wobei die Position des Arbeitsplatzes (40) in der Arbeitsstellung gegenüber der Transportstellung veränderbar ausgebildet ist, vorgeschlagen, mit der gute Sichtverhältnisse für die Bedienperson während des Transports und ebenso gute Sichtverhältnisse auf wenigstens einen Teil der Rechwerkzeuge während der Arbeit gewährleistet sind. Dies wird erfindungsgemäß dadurch erreicht, dass der Arbeitsplatz (40) in der Arbeitsstellung wenigstens teilweise hinter der Mittelachse wenigstens eines der Rechwerkzeuge (2,3,4) angeordnet ist.

## Beschreibung

Die Erfindung betrifft eine Vorrichtung zur Futterernte, insbesondere zum Schwaden von landwirtschaftlichem Halmgut, mit einem wenigstens einen Fahrersitz und Bedienelemente umfassenden Arbeitsplatz für eine Bedienperson und mit einer Futtererntemaschine nach dem Oberbegriff des Anspruchs 1.

### Stand der Technik

In der noch nicht veröffentlichten DE 10 2004 051 678 ist ein Kreiselschwader mit insgesamt sechs Rechwerkzeugen bzw. Schwadkreiseln dargestellt, die in V-Form in Fahrtrichtung offener Arbeitsstellung Erntegut zusammenrechen. Die V-Form wird durch zwei ausschwenkbare Längsträger erreicht, an denen die Rechwerkzeuge angeordnet sind. Bei derartigen Großschwadern wird eine Arbeitsbreite von ca. 22 Metern erreichbar.

Der Schwader wird an eine Zugmaschine angehängt, die den Arbeitsplatz der entsprechenden Bedienperson mit Sitz sowie Bedienelemente für den Schwader bzw. das Fahrzeug aufweist. Nachteilig hierbei ist jedoch, die erschwerte Überwachung der Rechwerkzeuge während dem Rechvorgang bzw. in Arbeitsstellung.

Weiterhin sind sogenannten Selbstfahrer bekannt, bei denen eine Antriebseinheit mit einem Antriebsmotor und dem Arbeitsplatz für eine Bedienperson integriert sind. Hierbei umfasst der Arbeitsplatz wiederum neben einem Fahrersitz zumindest auch Bedienelemente insbesondere zur Kontrolle der Rechwerkzeuge.

Die bekannten Selbstfahrer, insbesondere (z.B. DE 103 27 918) haben in Transportstellung eingefahrene Werkzeuge vor dem Arbeitsplatz der Bedienperson bzw. vor der Fahrerkabine, wodurch der Blick auf die Fahrbahn verstellt wird. Dies führt gerade bei Großschwadern mit mehreren Rechwerkzeugen zu erheblichen Sicht- und somit Sicherheitsproblemen auf öffentlichen Straßen.

Aus der DE 103 27 915 ist weiterhin ein Kreiselschwader mit sechs während der Arbeitsphase in V-Form angeordneter Kreisel bekannt, wobei der Fahrer bzw. dessen Position/Sitz in Bezug zum Fahrwerk des Schwaders zwischen der Arbeitsstellung und der Transportstellung längs der Fahrtrichtung verstellbar ist. Bei diesem Gespann hat der Fahrer zwar in der Transportstellung eine freie Sicht auf die Straße, da der Schwader vollständig hinter dem Fahrer angeordnet ist, allerdings ist eine Kontrolle vor allem der äußersten Kreisel durch die ziehende Anordnung in der Arbeitsstellung bei einem derart ausladenden Großschwader sehr eingeschränkt.

Beim Stand der Technik ist somit die Kontrolle des Großschwaders auf der Straße mit der Kontrolle des Großschwaders auf dem Feld bislang nicht vereinbar.

Aufgabe und Vorteile der Erfindung

Aufgabe der Erfindung ist es, eine Vorrichtung zur Futterernte, insbesondere zum Schwaden von landwirtschaftlichem Halmgut, vorzuschlagen, mit der gute Sichtverhältnisse für die Bedienperson auf die Straße während des Transports und ebenso gute Sichtverhältnisse auf wenigstens einen Teil der Rechwerkzeuge während der Arbeit gewährleistet sind.

Diese Aufgabe wird, ausgehend von einer Vorrichtung nach dem Oberbegriff des Anspruchs 1, durch dessen kennzeichnende Merkmale gelöst. Durch die in den Unteransprüchen genannten Maßnahmen sind vorteilhafte Ausführungen und Weiterbildungen der Erfindung möglich.

Dementsprechend zeichnet sich eine erfindungsgemäße Vorrichtung dadurch aus, dass der Arbeitsplatz in der Arbeitsstellung wenigstens teilweise hinter der Mittelachse wenigstens eines der Rechwerkzeuge angeordnet ist. Insbesondere ist ein Abstand zwischen Arbeitsplatz und wenigstens einem der Rechwerkzeuge und/oder die in Fahrtrichtung betrachtete Position des Arbeitsplatzes und/oder der in Fahrtrichtung betrachtete Abstand zwischen Arbeitsplatz und wenigstens einem der Rechwerkzeuge veränderbar ausgebildet.

Mit Hilfe einer dieser Maßnahmen oder deren Kombination ist es möglich, gerade bei sehr großen Maschinen bzw. Schwadern die bislang sich ausschließenden bzw. entgegenstehenden Aspekte Sicherheit im Straßenverkehr und Beherrschbarkeit der Rechwerkzeuge im Arbeitseinsatz in besonders eleganter Weise zu vereinen. Beispielsweise kann der Arbeitsplatz für die Arbeitsphase in die erfindungsgemäß Position bzw. in eine möglichst optimale Position verstellt werden, so dass die Überwachung der Rechwerkzeuge in der Arbeitsstellung durch seitliches Umblicken des Fahrers verbessert wird und zugleich die gute Sicht auf die Straße durch die im Wesentlichen im "Rücken" angeordneten Rechwerkzeuge in der Transportstellung erhalten bleibt.

Gegebenenfalls kann der Arbeitsplatz von einer Transportstellung in die Arbeitsstellung längs eines Verstellweges verstellt und/oder um eine Verstellachse verdreht werden. Vorzugsweise ist der Arbeitsplatz in der Arbeitsstellung hinter der Mittelachse und zudem wenigstens teilweise neben den Arbeitsbereich wenigstens eines ausgefahrenen Rechwerkzeugs verfahrbar. Hiermit kann die Bedienperson den Arbeitbereich des Rechwerkzeuges vergleichsweise einfach einsehen. Beispielsweise wird der in Fahrtrichtung gerichtete Abstand der Transportstellung zwischen Arbeitsplatz und Rechwerkzeug in der Arbeitsstellung verringert oder beseitigt.

In einer besonderen Variante ist der Arbeitsplatz im Wesentlichen zwischen zwei Rechwerkzeugen, insbesondere einer sogenannten Staffelreihe, angeordnet. Hierbei kann der Fahrer die beiden Rechwerkzeuge in der Arbeitsstellung besonders einfach im Blick behalten und überwachen. Dies ist vor allem bei den beiden außenangeordneten Rechwerkzeugen, insbesondere bei den beiden in Fahrtrichtung betrachteten vorderen Rechwerkzeugen ganz besonders von Vorteil. Diese können bei einem Schwader mit sechs Schwadkreiseln etwa 10 Meter vom Arbeitsplatz entfern angeordnet sein.

Vorteilhafterweise ist der Arbeitsplatz für die Arbeitsstellung wenigstens teilweise hinter den Arbeitsbereich wenigstens eines Rechwerkzeugs verstellbar bzw. verlegbar. Hiermit kann die Bedienperson den Arbeitbereich des Rechwerkzeuges besonders gut einsehen. Die/der Rechwerkszeuge sind hierdurch vor dem Fahrer und somit besonders gut im Blickfeld des Fahrers. Eine Drehung des Kopfes vom Fahrer kann zum Einsehen der Rechwerkzeuge gegebenenfalls entfallen. Diese Maßnahme bedeutet, dass der in Fahrtrichtung gerichtete Abstand der Transportstellung zwischen Arbeitsplatz und Rechwerkzeug in der Arbeitsstellung negativ wird.

Vorzugsweise ist eine Zugmaschine zum Anhängen der Futtererntemaschine vorgesehen, die den Arbeitsplatz umfasst. Alternativ hierzu ist die erfindungsgemäße Vorrichtung als Selbstfahrer ausgebildet. Dementsprechend können unterschiedlichste Varianten verwirklicht werden.

In einer besonderen Variante der Erfindung umfasst die Vorrichtung eine längenvariable Zugdeichsel. Hiermit kann Beispielsweise ist die Zugdeichsel zusammenklappbar, zusammenschiebbar oder ähnliches. Vorzugsweise weist die Zugdeichsel eine Teleskopanordnung und/oder eine ZylinderKolben-Einheit auf. Beispielsweise ist ein elektrischer und/oder hydraulischer Antrieb vorgesehen, der die Länge der Zugdeichsel verändern kann.

Gegebenenfalls sind in Arbeitsstellung mehrere schräg zur Fahrtrichtung angeordnete Rechwerkzeuge vorgesehen, z.B. längs einer winklig zur Fahrtrichtung angeordneten Linie. Vorteilhafterweise umfasst die Vorrichtung gemäß der Erfindung mehrere, in Arbeitsstellung V-förmig angeordnete Rechwerkzeuge.

In einer bevorzugten Ausführungsform der Erfindung ist der Arbeitsplatz wenigstens teilweise zwischen die V-förmig angeordneten Rechwerkzeuge in die Arbeitsstellung verfahrbar. Hierdurch ist eine besonders kompakte Anordnung der gesamten Vorrichtung bzw. eine besonders gute Übersicht über die bzw. eine Überprüfung der Rechwerkzeuge in der Arbeitsstellung realisierbar. Hierdurch können besonders hohe Arbeitsgeschwindigkeiten und/oder Hindernisse oder dergleichen besonders gut von der Bedienperson erfasst werden. Dies führt einerseits zu einer höheren Arbeitsleistung bzw. anderseits zu einer hohen Betriebssicherheit gerade auch bei Großschwadern.

Für ganz besondere Anwendungsfälle sind als Rechwerkzeuge Rechbänder oder dergleichen denkbar. Vorteilhafterweise umfasst die Futtererntemaschine als Rechwerkzeuge Schwadkreisel. Mit Schwadkreiseln können besonders hohe Arbeitsgeschwindigkeiten realisiert werden.

Beispielsweise sind wenigstens vier Rechwerkzeuge vorgesehen. Vorzugsweise umfasst die Futtererntemaschine wenigstens sechs Rechwerkzeuge und/oder Schwadkreisel.

Vorzugsweise ist wenigstens ein Rechwerkzeug an einem schwenkbaren Träger befestigt, der in der Transportstellung im Wesentlichen parallel zur Fahrtrichtung und in der Arbeitsstellung schräg und/oder mit einem spitzen Winkel zur Fahrtrichtung angeordnet ist. Diese Maßnahme kann z.B. durch ein Verschenken bzw. Ausklappen des Trägers um eine vertikale Achse realisiert werden.

Vorteilhafterweise sind zwei schwenkbare Träger beidseits der Zugdeichsel angeordnet. Hiermit ist eine symmetrische Anordnung der Rechwerkzeuge möglich. Dies führt zu einer besonders guten Kraftverteilung.

In einer besonderen Weiterbildung der Erfindung ist eine in der Position veränderbare, vorzugsweise drehbare Fahrerkabine vorgesehen. Dies ist sowohl als Alternative zur längenveränderbaren Zugdeichsel, aber auch durchaus als denkbare Kombination hierzu zu sehen. Gegebenenfalls ist ein Mittelträger vorgesehen, wobei die Fahrerkabine oberhalb des Mittelträgers verschiebbar ausgebildet ist.

Vorzugsweise ist eine von der Transportstellung in die Arbeitsstellung um wenigstens 180° drehbare Fahrerkabine vorgesehen. Hierdurch kann ein Wechsel bzw. Tausch der in der Transportstellung hinteren verwirklicht werden, so dass diese in Arbeitsstellung vordere Komponenten bilden und umgekehrt.

Vorteilhafterweise ist ein in der Position veränderbarer Triebkopf vorgesehen. Gegebenenfalls kann der Triebkopf mittels einer schwenkbaren Kupplungseinheit und/oder Knicklenkung oder dergleichen mit den Rechwerkzeugen verbunden werden.

In einer bevorzugten Variante der Erfindung ist wenigstens eine Kopplungseinheit zum Koppeln der Längenverstellung der Zugdeichsel mit dem Verstellen des Rechwerkzeuges in die Arbeitsstellung und/oder dem Verschwenken der Träger um im Wesentlichen vertikal ausgerichtete Hochachsen vorgesehen. Hierdurch kann sich der konstruktive Aufwand verringern.

Vorzugsweise ist die Kopplungseinheit derart ausgebildet, dass sich beim Ausschwenken der Träger insbesondere um die Hochachsen die Länge der Zugdeichsel verkürzt. Hiermit wird die Verstellphase verkürzt, die die Umstellung zwischen Arbeitsposition und Transportposition umfasst.

Vorteilhafterweise ist ein gemeinsamer Antrieb vorgesehen, der zumindest den Schwenkantrieb der Träger und den Antrieb der Längenverstelleinheit der Zugdeichsel umfasst. Diese Maßnahme verringert den konstruktiven Aufwand zusätzlich.

In einer vorteilhaften Ausführungsform der Erfindung ist der gemeinsame Antrieb und/oder der Schwenkantrieb der Träger und/oder der Antrieb der Längenverstelleinheit der Zugdeichsel hydraulisch und/oder elektrisch ausgebildet. Hier kann auf bereits vorhandene Systeme zurückgegriffen werden, so dass eine wirtschaftlich günstige Umsetzung der Erfindung erreicht werden kann.

Generell ist auch denkbar, dass das Verschwenken des/der Träger mit den Rechwerkzeugen durch den Antrieb der Vorrichtung erfolgen kann. Zum Beispiel wird eine Achse der gesamten Vorrichtung angetrieben und zumindest eine weitere Achse gebremst. Hierbei kann der Abstand der beiden Achsen vorteilhaft verändert werden, so dass die erfindungsgemäße Wirkung verwirklicht wird. Vorzugsweise ist wenigsten eine Rasteinheit vorgesehen, die ein Formschluss bzw. ein Verrasten und/oder Fixieren in Arbeitsstellung und/oder Transportstellung ermöglicht. Gegebenenfalls ist wenigstens das Lösen der Verastung fernbedienbar bzw. automatisierbar, so dass der Fahrer z.B. vom Arbeitsplatz aus insbesondere den Umbau der Vorrichtung kontrollieren kann.

Grundsätzlich kann wenigstens ein Rechwerkzeug beim Ausfahren und/oder Ausklappen und/oder Ausschenken von der Transportstellung mit geringer Breite in die Arbeitsstellung mit großer Breite zusätzlich in Fahrtrichtung gerichtet verstellt und/oder verschwenkt werden. Gegebenenfalls sind mehrere Rechwerkzeuge entsprechend nach außen und nach vorne in Fahrtrichtung verstellbar. Beispielsweise ist ein Verschwenken um eine im Wesentlichen vertikal ausgerichtete Achse und/oder um eine im Wesentlichen horizontal und zugleich zur Fahrtrichtung schräg, insbesondere spitzwinklig angeordnete Achse denkbar. Auch ist ein vorzugsweise mehrgliedriger Klappmechanismus denkbar, der in Arbeitsstellung eine in Fahrtrichtung gerichtete L-Form aufweist, wobei wenigstens ein Glied quer zur und ein Glied im Wesentlichen in Fahrtrichtung gerichtet ist.

Grundsätzlich wird gemäß der Erfindung gewährleistet, dass der Fahrer vor allem die äußeren Schwadkreisel bzw. die Außenkanten des Kreiselschwaders besonders einfach im Blick halten kann und/oder diese überprüfen kann. Hiermit wird gerade bei einem sechsfachen Schwader die Betriebssicherheit auf dem Feld deutlich erhöht.

### Ausführungsbeispiel

Ein Ausführungsbeispiel der Erfindung ist in der Zeichnung dargestellt und wird nachfolgend anhand der Figuren näher erläutert.

Es zeigen:
- Fig. 1: zeigt ein Ausführungsbeispiel der Erfindung dargestellt am Beispiel eines gezogenen Kreisselschwaders in einer Seitenansicht in einer Zwischenstellung,
- Fig. 2: zeigt ein Ausführungsbeispiel der Erfindung dargestellt am Beispiel eines gezogenen Kreiselschwaders in einer Draufsicht in einer Zwischenstellung,
- Fig. 3: zeigt den Kreiselschwader gemäß Fig. 1 und Fig. 2 in einer perspektivischen Ansicht im verklappten Zustand in einer Transportstellung,
- Fig. 4: zeigt den Kreiselschwader gemäß Fig. 3 in einer Seitenansicht in Transportstellung,
- Fig. 5: zeigt einen Kreiselschwader gemäß Fig. 4 in einer Draufsicht in Transportstellung,
- Fig. 6: zeigt einen Kreiselschwader gemäß Fig. 1 in vereinfachter Darstellung in einer Draufsicht in einer Zwischenstellung,
- Fig. 7: zeigt einen Kreiselschwader gemäß Fig. 6 in vereinfachter Darstellung in einer Draufsicht in einer Zwischenstellung mit einer reduzierten Arbeitsbreite,
- Fig. 8: zeigt einen Kreislschwader in einer weiteren Zwischenstellung zur Verklappung der Schwadkreisel in die Transportstellung,
- Fig. 9: zeigt einen Kreiselschwader gemäß Fig. 1 in vereinfachter Darstellung in einer Draufsicht in Arbeitsstellung mit einer zusammengezogenen Deichsel,
- Fig. 10: zeigt einen weiteren Kreislschwader in einer schematischen Draufsicht in Arbeitsstellung des Arbeitsplatzes und der Rechwerkzeuge gemäß der Erfindung und
- Fig. 11: zeigt den Kreiselschwader gemäß Fig. 10 in einer schematischen Draufsicht in Transportstellung des Arbeitsplatzes.

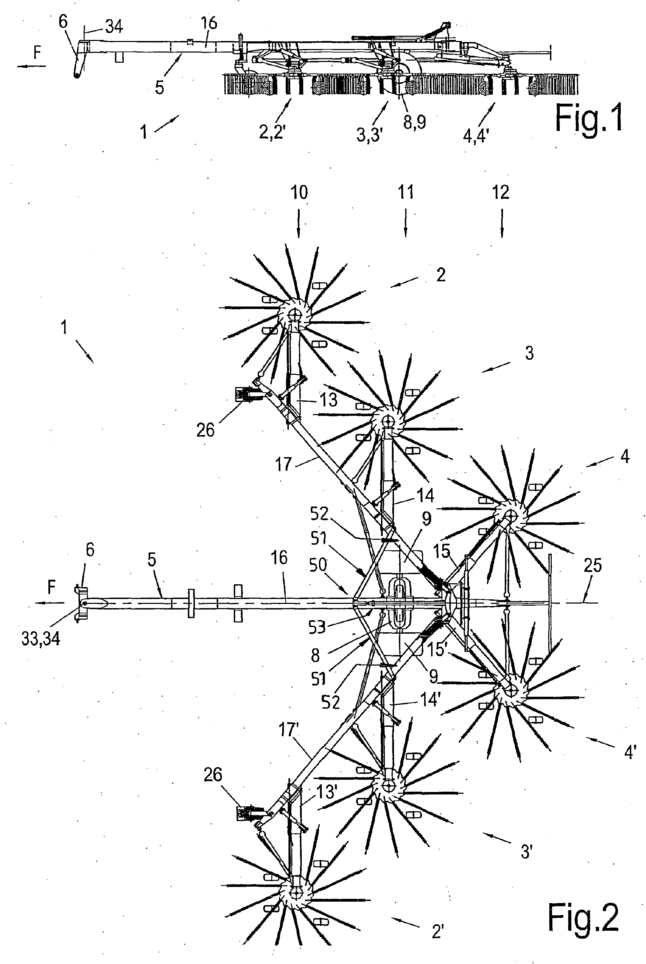

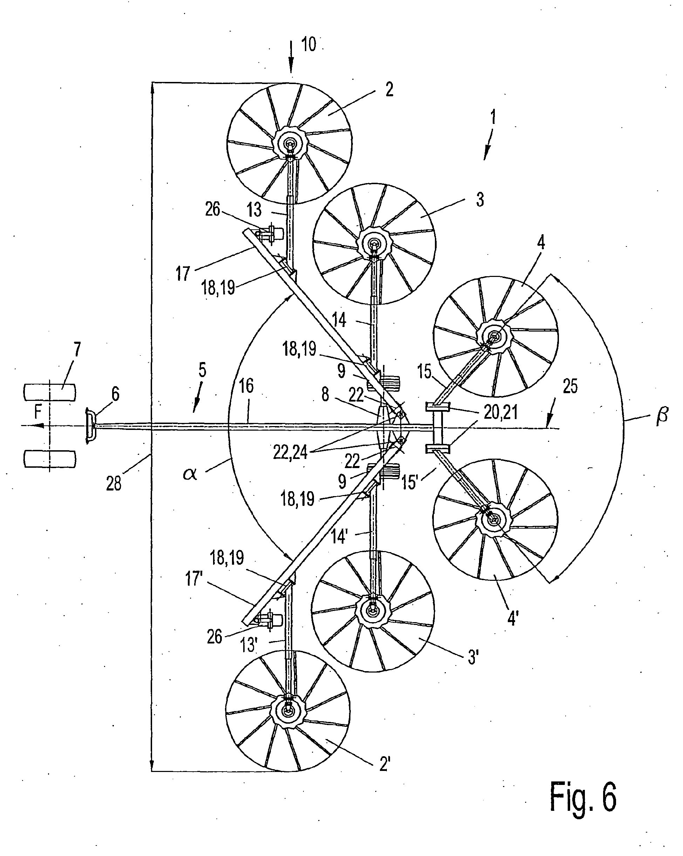

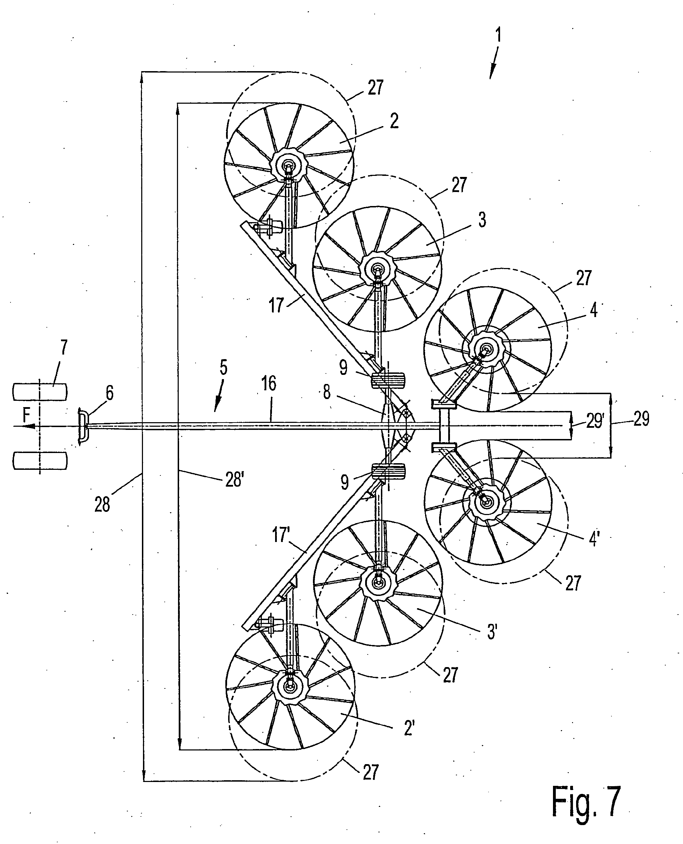

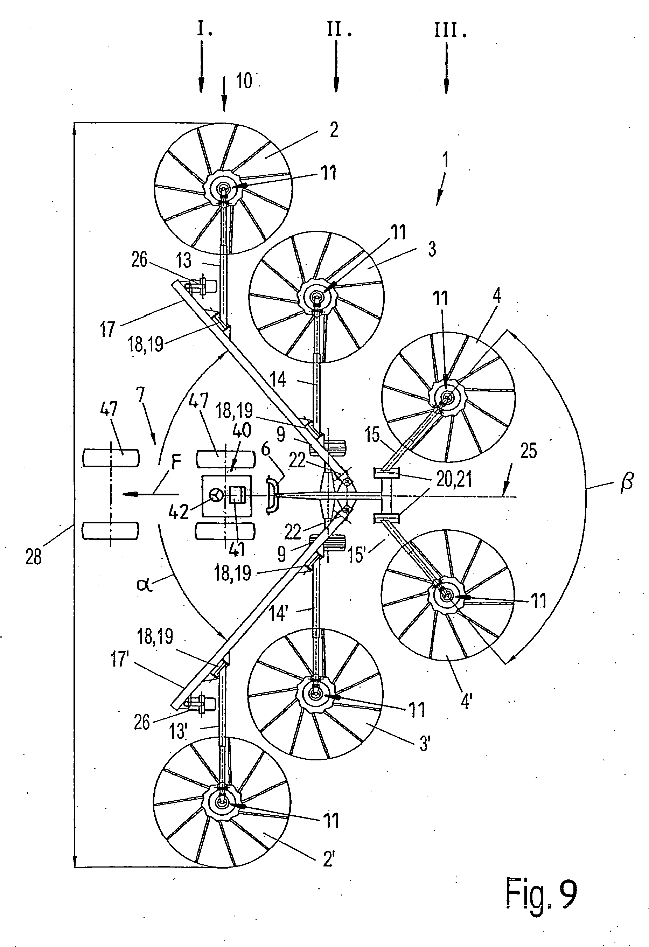

Fig. 1 und Fig. 2 zeigen ein Ausführungsbeispiel der Erfindung dargestellt am Beispiel eines gezogenen Kreiselschwaders 1 in einer Seitenansicht und in einer Draufsicht in Arbeitsstellung, ausgeführt als Mittelschwader. Analog zeigen die Fig. 6 und die Fig. 7 den Kreiselschwader in vereinfachter Darstellung ebenfalls in einer Draufsicht in einer Zwischenstellung mit ausgeschwenkten Trägern 17, 17', jedoch mit einer längenveränderbaren Deichsel 16 bzw. eines Längsträgers 16. Beispielsweise ist die Deichsel 16 teleskopierbar ausgebildet. In den Figuren 1 bis 8 ist die Deichsel 16 in ausgezogener Stellung bzw. mit maximaler Länge schematisch dargestellt. In Figur 9 ist die Deichsel 16 in zusammengezogener bzw. mit minimaler Länge schematisch dargestellt.

Insgesamt verfügt der Kreiselschwader 1 über sechs Schwadkreisel 2, 2', 3, 3', 4, 4', die in drei Staffelreihen 10, 11, 12 V-förmig zueinander angeordnet sind. Die Arbeitsrichtung ist durch die Fahrtrichtung F angedeutet. Dabei kann der Kreiselschwader 1 mittels einer Kupplungseinrichtung 6 an einen Traktor 7 mit Räder 47 und Arbeitsplatz 40 angehängt werden. Der Arbeitsplatz umfasst gemäß Figur 9 neben einem Sitz 41, einen Lenker 42 und weitere nicht näher dargestellt Bedienelemente zum Bedienen des Traktors 7 und des Schwaders 1.

An die Kupplungseinrichtung 6 angeschlossen ist der deichselbildende Längsträger 16 als Teil des Fahrgestells 5, wobei der deichselbildende Längsträger 16 mittels eines Zuggelenks 33, um die Hochachse 34 verschwenkbar ist, welches dem Kreiselschwader 1 die Nachlaufeigenschaften eines gezogenen landwirtschaftlichen Gerätes vermittelt. Abgestützt wird der deichselbildende Längsholm im hinteren Bereich auf ein Fahrwerk 8 mit den Laufrädern 9.

Jeder der Schwadkreisel 2, 2', 3, 3', 4, 4' ist mittels eines Auslegers 13, 13', 14, 14', 15, 15' mit dem Fahrgestell 5 gelenkig in Gelenkverbindungen 18, 20, ausgebildet als Klappgelenke mit den Gelenkachsen 19, 21, verbunden. Dabei sind die Schwadkreisel 2, 2', 3, 3' an Längszusatzträgern 17, 17' indirekt mit dem deichselbildenden Längsträger 16 verbunden. Die deichselbildenden Längszusatzträger 17, 17' sind im hinteren Bereich des deichselbildenden Längsträgers 16 in Gelenkverbindungen, ausgebildet als Klappgelenke 24 mit den Hochachsen 22, mit diesen verbunden. Die Schwadkreisel 2, 2', 3, 3' und deren in Arbeitsstellung aufgeklappte Längszusatzträger 17, 17' sind symmetrisch zur Hauptlängsmittelebene 25 angeordnet. Im vorderen Bereich der Längszusatzträger 17, 17' werden diese jeweils durch ein Stütz- und Nachlaufrad 26 abgestützt. Damit die Längszusatzträger sich den Unebenheiten bzw. dem Bodenrelief des zu überfahrenden Geländes anpassen können, sind diese mittels eines Horizontalgelenks 23 endseitig an dem deichselbildenden Längsträger 16 angelenkt. Das Horizontalgelenk 23 und das Klappgelenk 24 kann auch als kardanisches Gelenk mit sich schneidenden Gelenkachsen ausgebildet sein. Dabei sind die Längszusatzträger 17, 17' derart aufgeklappt, dass sie den Öffnungswinkel α zueinander einnehmen.

Im hinteren Bereich des deichselbildenden Längsträgers 16 sind die Ausleger 15, 15' der Schwadkreisel 4, 4' gelenkig in den Klappgelenken 20 mit deren Gelenkachse 21 derart mit diesem verbunden, dass die Ausleger 15, 15' in der Arbeitsstellung den Öffnungswinkel β zueinander einnehmen.

Die Ausleger 13, 13', 14, 14', 15, 15' sind vorzugsweise längenveränderbar ausgebildet derart, dass diese eine Verlagerung der an sie angeschlossenen Rechkreisel in Richtung deren Längserstreckung ermöglichen. Vorteilhafterweise ist die Ausrichtung der Ausleger 13, 13' 14, 14' so gewählt, dass die Längserstreckung dieser Ausleger 13, 13', 14, 14' überwiegend quer zur Fahrtrichtung F bzw. etwa lotrecht zur Längsmittelebene 25 verläuft. Die Ausrichtung der Längserstreckung der hinteren Ausleger 15, 15' hingegen ist so gewählt, dass diese schräg zur Fahrtrichtung F unter dem Winkel ½ β gegenüber der Längsmittelebene 25 verlaufen.

In Fig. 7 ist die Auswirkung der so möglichen Verlagerung der Rechkreisel dargestellt, in dem die Konturenkreise 27 die Situation der maximalen Arbeitsbreite 28 wiedergeben, wobei in der Darstellung durch die Verlagerung der Rechkreisel in Richtung der Hauptlängsmittelebenen 25 die minimale Arbeitsbreite 28' dargestellt ist. Da es sich hierbei um eine kontinuierliche Verschiebung im Sinne der Verlagerung handelt, kann jede Arbeitsbreite 28, 28' in den Grenzen zwischen Maxima und Minima eingestellt werden. Das Maximum der Arbeitsbreite 28 bzw. das Minimum der Arbeitsbreite 28' ist definiert durch den Betrag des maximalen Verschiebeweges der äußeren Schwadkreisel 2, 2', der gleichzeitig durch den maximalen Verschiebeweg der Ausleger 13, 13' definiert ist.

Beispielsweise beim Kurvenfahren kann die Arbeitsbreite der einzelnen Staffelreihen 10, 11, 12, I, II, III in vorteilhafter Weise verändert werden, wobei insbesondere durch die Verschiebung der Schwadkreisel 4, 4' die Arbeitsbreite kontinuierlich verstellt bzw. variiert werden kann. Hierbei kann der Verschiebeweg der Schwadkreisel 4, 4' bzw. deren Verrückung ebenfalls durch die Längenveränderung der Ausleger 15, 15' herbeigeführt werden. Zum Beispiel kann dies automatisiert erfolgen und/oder in Abhängigkeit des Lenkwinkels des Traktors 7 bzw. des Kurvenradius des Kreiselschwaders 1. Beim Kurvenfahren ist auch der verringerte Abstand der vorderen Staffelreihen I, II im Vergleich zum Abstand der hinteren Staffelreihen II, III von Vorteil.

Die Schwadbreite 29, 29' kann ebenfalls, bedingt durch die Verschiebung der Schwadkreisel 4, 4' kontinuierlich verstellt bzw. variiert werden, wobei der Verschiebeweg der Schwadkreisel 4, 4' bzw. deren Verrückung ebenfalls durch die Längenveränderung der Ausleger 15, 15' herbeigeführt wird.

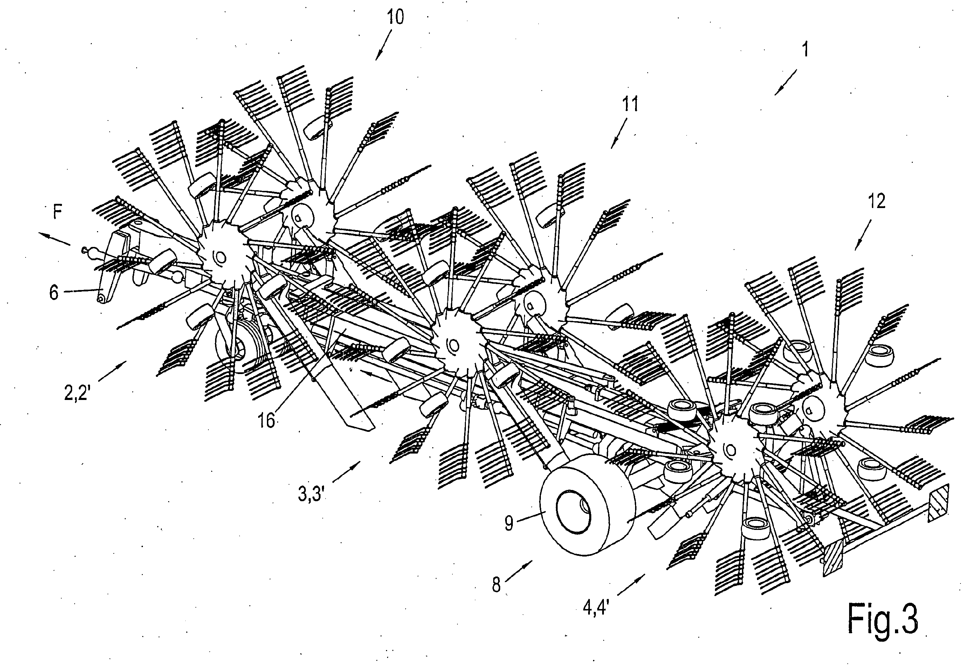

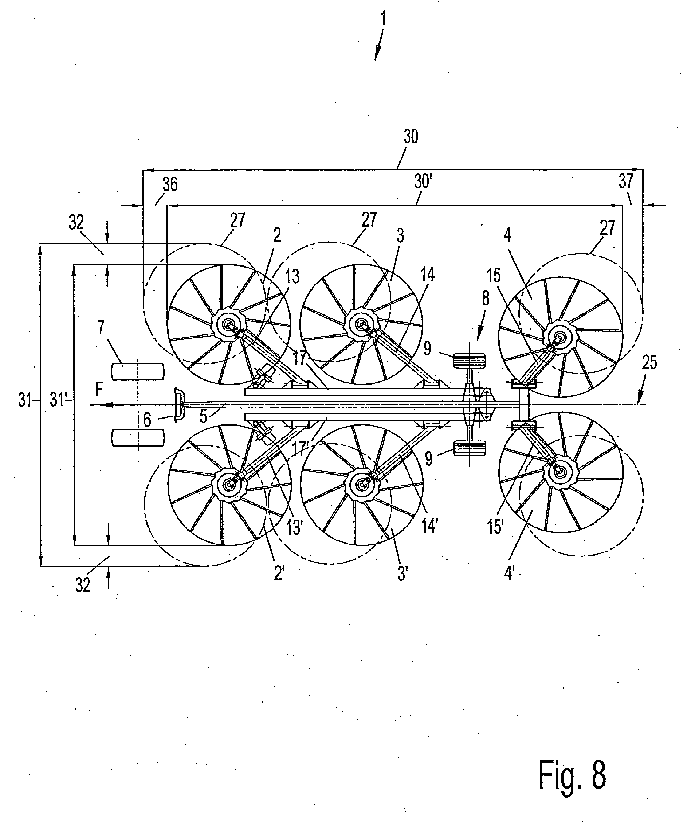

Fig. 8 zeigt den Kreiselschwader 1 in einer weiteren Zwischenstellung in Vorbereitung zur Verklappung der Schwadkreisel 2, 2', 3, 3', 4, 4' in die Transportstellung, wie in Fig. 3 dargestellt. Wie in Fig. 8 dargestellt, sind die Längszusatzträger 17, 17' nunmehr entgegen der Arbeitsstellung angeklappt und nehmen eine Ausrichtung etwa parallel zur Fahrtrichtung F bzw. der Hauptlängsmittelebene 25 ein. Dadurch bedingt, dass die längenveränderbaren Ausleger 13, 13', 14, 14', 15, 15' auf ihre - wie dargestellt - minimale Länge eingefahren sind, nehmen die Schwadkreisel 2, 2', 3, 3', 4, 4' gegenüber der Lage, die bei voll ausgefahrenen Auslegern 13, 13', 14, 14' eingenommen wird, eine die äußere Breite 31 reduzierende Lage ein, welche durch die reduzierte äußere Breite 31' gekennzeichnet ist.

Dieses verdeutlichen die Konturkreise 27, welche die äußere Breite 31 bei voll ausgefahrenen Auslegern 13, 13', 14, 14' kennzeichnen. Nach dem Hochklappen der Schwadkreisel um ihre Gelenkachsen 19 bzw. 21 reduziert sich die Transporthöhe um den Betrag der Höhendifferenz 32. Gleichzeitig erfahren die Schwadkreisel 2, 2', 3, 3' eine Verschiebung um die Längendifferenz 36 entgegen der Fahrtrichtung F, welches es ermöglicht, dass der deichselbildende Längsträger 27 entsprechend kürzer gestaltet sein kann, als dieses ohne die Verschiebung zur Erzeugung der Längendifferenz 36 der Fall sein würde. Infolge dessen kann der Traktor 7 näher an das Fahrgestell 8 heranrücken, welches die Gespannlänge entsprechend kürzer werden lässt.

Analog ergibt sich eine weitere Längendifferenz 37 nach dem gleichen Schema der Verschiebung der Schwadkreisel 4, 4' durch das Einfahren der längenveränderbaren Ausleger 15, 15'. Nunmehr jedoch stellt sich eine Längs- und Querverrückung der Schwadkreisel 4, 4' ein, und zwar eine Längsverrückung in Fahrtrichtung F und eine Querverrückung in Richtung der Hauptlängsmittelebene.

Die Längsverrückung in Fahrtrichtung F liefert ebenfalls einen Beitrag zur Verkürzung der Transportlänge 30, 30' des Kreiselschwaders 1 in dessen Transportstellung, so dass auch dieses einen Beitrag zur Verkürzung der Gespannlänge aus Traktor 7 und angehängtem Kreiselschwader 1 darstellt. Dadurch bedingt verkürzt sich die Transportlänge 30 des Kreiselschwaders 1 um die Summe der Beträge der Längendifferenzen 36, 37 auf die nunmehr reduzierte Transportlänge 30'.

In der Fig. 3 ist der Kreiselschwader 1 in einer perspektivischen Ansicht im verklappten Zustand in seiner endgültigen Transportstellung, d.h. höhen- und längenreduziert dargestellt.

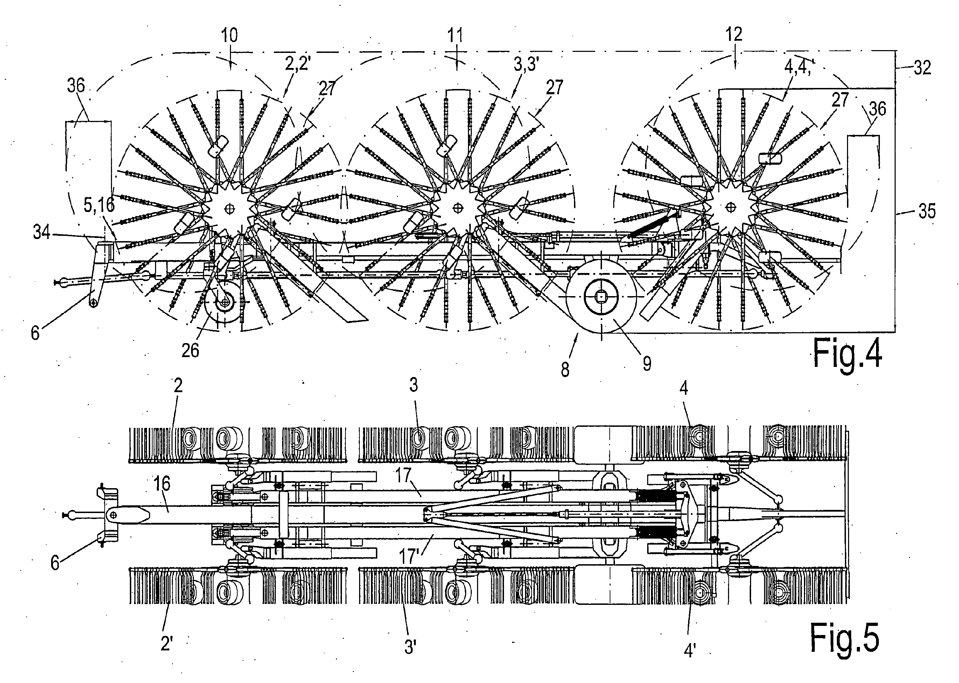

In Fig. 4 ist der Kreiselschwader 1 gemäß Fig. 3 in einer Seitenansicht und in Fig. 5 in einer Draufsicht in seiner Transportstellung dargestellt.

Die vorgenannten Merkmale liefern somit einen Beitrag zur Verkürzung der Transportlänge und zur Reduzierung der Transporthöhe zugleich, welches einen Beitrag zur Erhöhung der Verkehrssicherheit insgesamt liefert. Selbst bei großen Arbeitsbreiten eines Kreiselschwaders 1 nach der Erfindung, wie beispielsweise etwa 22 Meter, liegen dieses im verklappten Transportzustand noch in den Abmessungen des zulässigen Straßentransportprofils, wobei eine Abnahme der Zinkenarme dazu nicht einmal erforderlich wäre.

Darüber hinaus zeigt Figur 9 die Arbeitsstellung gemäß einer Variante der Erfindung, wobei der Traktor 7 teilweise zwischen den vorderen Schwadkreiseln 2, 2' und zudem der Fahrer bzw. Sitz 41 hinter einer Mittelachse M des vordersten Rechwerkzeugpaares bzw. Schwadkreiseln 2, 2'angeordnet ist. Hier ist der Längsträger 16 bzw. die Deichsel 16 in der (vollständig) eingefahrenen Stellung, wodurch der Traktor 7 im Gegensatz zur in Figur 6 dargestellten Position in den Innenbereich des Kreiselschwaders "gezogen" wird bzw. umgekehrt. In dieser Stellung kann der Fahrer sehr gut die äußersten Schwadkreisel 2 und 2' bzw. die Außenkanten des Kreiselschwaders 12 in der Arbeitsstellung leicht überprüfen bzw. einsehen, ohne (große) Kopfverstellungen.

Ohne nähere Darstellung kann die Verkürzung der Deichsel 16 mit dem ausschwenken der Träger 17, 17' gekoppelt werden. Beispielsweise könnte mittels einer Dreiecksanordnung eine Kopplung in besonders einfacher Weise verwirklicht werden. Diese Dreiecksanordnung kann z.B. drei Abschnitte 51, 52, 53 bzw. Holme 51, 52, 53 gemäß Figur 2 umfassen. Beim Ausschwenken der Träger 17, 17' wird ein Punkt 50 entgegen der Fahrtrichtung F nach hinten verschoben, wie dieser in Figur 2 dargestellt ist. In Transportstellung des Schwaders 1 ist der Punkt 50 weiter vorne angeordnet. Entgegen der in Figur 2 dargestellten Variante der Erfindung könnte diese Verstellung des Punktes 50 zugleich einen als längenveränderbaren Abschnitt 53 ausgebildeten Teil der Deichsel 16 verkürzen. Hierdurch würde sich gemäß der Erfindung der Arbeitsplatz 40 ebenfalls entgegen der Fahrtrichtung F nach hinten bewegen, z.B. in den Bereich zwischen die Schwadkreisel 2, 2' (vgl. z.B. wie in Figur 9).

Die Verkürzung der Deichsel 16 wird umso ausgeprägter, umso länger die Abschnitte 51, 52, 53 ausgebildet sind. Gegebenenfalls könnte der Abschnitt 52 im Wesentlichen der gesamten Länge des Trägers 17, 17'entsprechen. Hiermit würde eine besonders ausgeprägte Verkürzung des Abschnitts 53 realisiert werden. Vor allem die Länge des Abschnitts 51 beeinflusst den Öffnungswinkel α bzw. die Abhängigkeit der Deichselverkürzung vom Öffnungswinkel α.

Bei der Variante gemäß Figur 2 ist eine separate, nicht näher dargestellte Einheit, z.B. eine Kolben-Zylinder-Einheit und/oder Teleskopanordnung zum Verkürzen der Deichsel 16 vorgesehen, die in der dargestellten Zwischenstellung nicht unmittelbar mit dem Ausschwenken der Träger 17, 17' gekoppelt ist. Das Verkürzen der Deichsel 16 wäre bei dieser Variante der Erfindung der nächste Schritt.

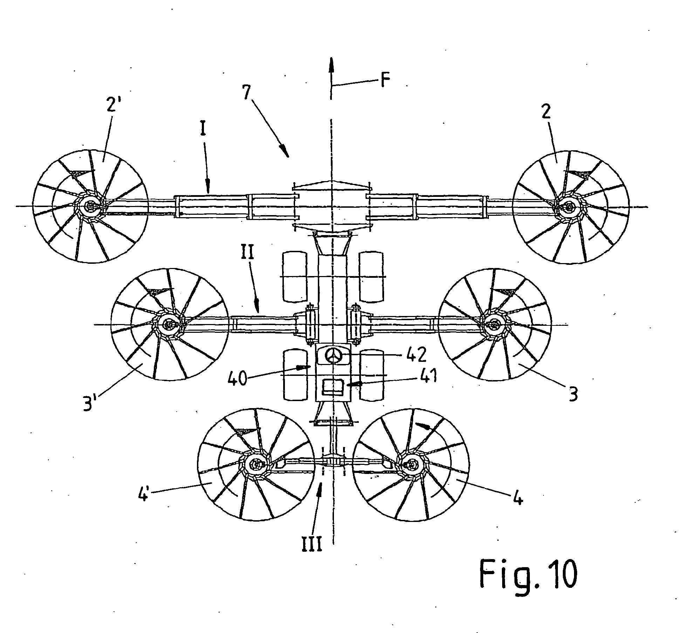

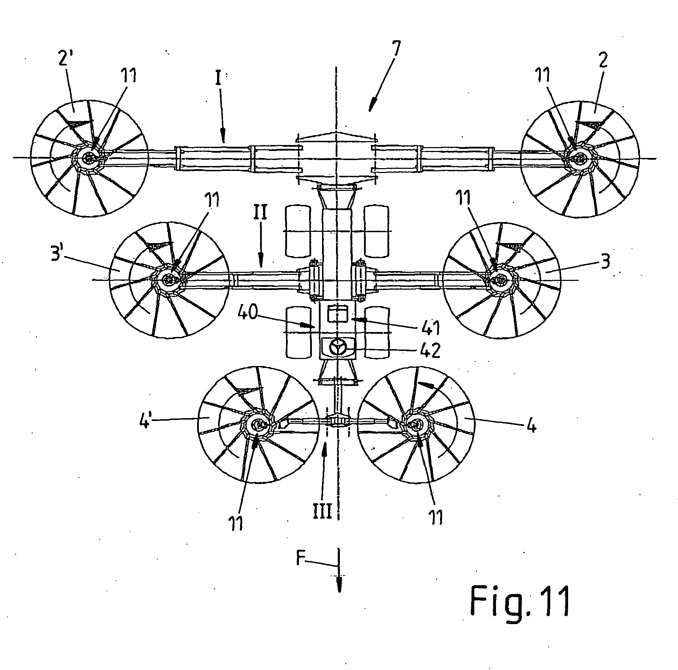

In den Figuren 10 und 11 ist eine weitere Variante gemäß der Erfindung als sog. Selbstfahrer schematisch dargestellt. Figur 10 zeigt die Arbeitsstellung sowohl des Arbeitsplatzes 40 bzw. die Stellung des Sitzes 41 zum Lenker 42 als auch die Arbeitsstellung der Schwadkreisel 2, 2', 3, 3', 4, 4' und zugehöriger ausgefahrener (Teleskop-)Ausleger.

Im Unterschied zur Figur 10 ist in Figur 11 die Transportstellung des Arbeitsplatzes 40 bzw. Sitzes 41 dieses Großschwaders dargestellt. Lediglich aus darstellerischen Gründen sind die Schwadkreisel 2, 2', 3, 3', 4, 4' mit zugehörigen (Teleskop-)Auslegern nicht in Transportstellung, sondern in Arbeitsstellung entsprechend Figur 10 abgebildet.

Der Wechsel des Arbeitsplatzes 40 bzw. Sitzes 41 mit Lenker 42 von der Transportstellung (vgl. Figur 11) in die Arbeitsstellung (vgl. Figur 10) und umgekehrt erfolgt vorzugsweise durch eine Drehung um 180° um eine vertikal ausgerichtete Drehachse bzw. durch eine nicht detaillierter dargestellte, vertikal drehbare Arbeitskabine.

Gemäß der Erfindung ist der Arbeitsplatz 40 bzw. der Fahrersitz 41 hinter einer der Mittelachsen M der Schwadkreisel 2, 2', 3, 3'. Das bedeutet gemäß dieser Variante der Erfindung ist der Fahrer in Arbeitsstellung sogar hinter der zweiten Staffelreihe II angeordnet. Dementsprechend gut kann dieser die beiden vorderen Staffelreihen I und II, d.h. vor allem besonders gut die vordersten Schwadkreisel 2, 2', sehen bzw. während der Arbeitsphase kontrollieren. Da die hinteren Schwadkreisel 4, 4' sehr dicht hinter dem Fahrer angeordnet sind, schwenken diese während einem Wendemanöver nicht stark aus, was unter anderem auch deren Kontrolle während der Arbeitsphase im Vergleich zum Stand der Technik verbessert bzw. erleichtert.

Durch Figur 11 wird deutlich, dass während des Transportes bzw. in Transportfahrtrichtung F lediglich eine einzige Staffelreihe III bzw. ein Schwadkreiselpaar 4, 4' vor dem Fahrer (allerdings in zusammengeklappter bzw. hochgeschwenkter Position) angeordnet ist. Zudem handelt es sich um die Staffelreihe III bzw. um die Schwadkreisel 4, 4' mit den kleinsten Auslegern bzw. Teleskoparmen. Die Ausleger der Staffelreihe III können im Vergleich zu den wesentlich größeren Auslegern der Staffelreihe I deutlich kleiner, insbesondere niedriger und kleinvolumiger, zusammengelegt bzw. gefahren werden. Dies bedeutet, dass der Fahrer auch während der Fahrt eine sehr gute Sicht auf die Straße bzw. den Verkehr hat.

Zum Beispiel sind die Ausleger der Staffelreihe I zweifach teleskopierbar und die Ausleger der Staffelreihe II und/oder der Staffelreihe III lediglich einfach teleskopierbar. Gegebenenfalls sind die Ausleger der Staffelreihe III nicht teleskopierbar und werden lediglich umgeklappt bzw. hochgeschwenkt.

Möglicherweise kann der Tragarm bzw. die Trageinheit der Staffelreihe III vertikal, insbesondere nach untern verstellt bzw. geschwenkt werden, so dass in Transportstellung die Staffelreihe III in besonders tiefliegender Stellung angeordnet werden kann. Dies verbessert zusätzlich die Sicht für den Fahrer in Transportstellung des Schwaders. In Arbeitsstellung kann der Tragarm bzw. die Trageinheit der Staffelreihe III nach oben verstellt werden, so dass eine hohe Bodenfreiheit entsteht, was z.B. deren mögliche Beeinträchtigung durch Hindernisse auf dem Feld verhindert.

Bezugszeichenliste:
- 1: Kreiselschwader
- 2,2': Schwadkreisel
- 3,3': Schwadkreisel
- 4,4': Schwadkreisel
- 5: Fahrgestell
- 6: Kupplungseinrichtung
- 7: Traktor
- 8: Fahrwerk
- 9: Laufräder
- 10: erste Staffelreihe
- 11: zweite Staffelreihe
- 13: dritte Staffelreihe
- 13,13': Ausleger
- 14,14': Ausleger
- 15,15': Ausleger
- 16: Längsträger
- 17,17': Träger
- 18: Klappgelenk
- 19: Gelenkachse
- 20: Klappgelenk
- 21: Gelenkachse
- 22: Hochachse
- 23: Horizontalgelenk
- 24: Klappgelenk
- 25: Hauptlängsmittelebene
- 26: Nachlaufrad
- 27: Konturkreis
- 28,28': Arbeitsbreite
- 29,29': Schwadbreite
- 30, 30': Transportlänge
- 31,31': äußere Breite
- 32: Höhendifferenz
- 33: Zuggelenk
- 34: Hochachse
- 35: Transporthöhe
- 36: Längendifferenz
- 37: Längendifferenz
- 40: Arbeitsplatz
- 41: Sitz
- 42: Lenker
- 47: Räder
- 50: Punkt
- 51: Abschnitt
- 52: Abschnitt
- 53: Abschnitt

- F: Fahrtrichtung
- M: Mittelachse
- α: Öffnungswinkel
- β: Öffnungswinkel

## Patentansprüche

1. Vorrichtung zur Futterernte, insbesondere zum Schwaden von landwirtschaftlichem Halmgut, mit einem wenigstens einen Fahrersitz (41) und Bedienelemente (42) umfassenden Arbeitsplatz (40) für eine Bedienperson und mit einer Futtererntemaschine (1), die eine Arbeitsstellung mit einem oder mehreren ausgefahrenen, um jeweils eine im Wesentlichen vertikale Mittelachse (M) drehbaren Rechwerkzeugen (2, 3, 4) für eine entsprechend große Arbeitsbreite und eine Transportstellung mit einem oder mehreren eingefahrenen Rechwerkzeugen (2, 3, 4) für eine entsprechend kleine Transportbreite aufweist, wobei die Position des Arbeitsplatzes (40) für die Bedienperson in der Transportstellung bezogen auf die Fahrtrichtung (F) während des Transports vor wenigstens einem Rechwerkzeug (2, 3, 4) angeordnet ist und wobei die Position des Arbeitsplatzes (40) in der Arbeitsstellung gegenüber der Transportstellung veränderbar ausgebildet ist, **dadurch gekennzeichnet, dass** der Arbeitsplatz (40) in der Arbeitsstellung wenigstens teilweise hinter der Mittelachse (M) wenigstens eines der Rechwerkzeuge (2, 3, 4) angeordnet ist.

2. Vorrichtung zur Futterernte nach Anspruch 1 **dadurch gekennzeichnet, dass** der Arbeitsplatz (40) in der Arbeitsstellung wenigstens teilweise hinter dem Arbeitsbereich (27) wenigstens eines Rechwerkzeugs (2, 3, 4) angeordnet ist.

3. Vorrichtung zur Futterernte nach einem der vorgenannten Ansprüche **dadurch gekennzeichnet, dass** eine den Arbeitsplatz (40) umfassende Zugmaschine (7) zum Anhängen der Futtererntemaschine (1) vorgesehen ist.

4. Vorrichtung zur Futterernte nach einem der vorgenannten Ansprüche **dadurch gekennzeichnet, dass** die Futtererntemaschine (1) eine längenvariable Zugdeichsel (16) umfasst.

5. Vorrichtung zur Futterernte nach einem der vorgenannten Ansprüche **dadurch gekennzeichnet, dass** die Futtererntemaschine (1) mehrere, in Arbeitsstellung V-förmig angeordnete Rechwerkzeuge (2, 3, 4) umfasst.

6. Vorrichtung zur Futterernte nach einem der vorgenannten Ansprüche **dadurch gekennzeichnet, dass** der Arbeitsplatz (40) wenigstens teilweise zwischen die V-förmig angeordneten Rechwerkzeuge (2, 3, 4) verfahrbar ist.

7. Vorrichtung zur Futterernte nach einem der vorgenannten Ansprüche **dadurch gekennzeichnet, dass** die Futtererntemaschine (1) als Rechwerkzeuge (2, 3, 4) Schwadkreisel (2, 3, 4) umfasst.

8. Vorrichtung zur Futterernte nach einem der vorgenannten Ansprüche **dadurch gekennzeichnet, dass** die Futtererntemaschine (1) wenigstens sechs Schwadkreisel (2, 3, 4) umfasst.

9. Vorrichtung zur Futterernte nach einem der vorgenannten Ansprüche **dadurch gekennzeichnet, dass** wenigstens ein Rechwerkzeug (2, 3, 4) an einem schwenkbaren Träger (17) befestigt ist, der in der Transportstellung im Wesentlichen parallel zur Fahrtrichtung (F) und in der Arbeitsstellung schräg zur Fahrtrichtung (F) angeordnet ist.

10. Vorrichtung zur Futterernte nach einem der vorgenannten Ansprüche **dadurch gekennzeichnet, dass** zwei schwenkbare Träger (17, 17') beidseits der Zugdeichsel (16) angeordnet sind.

11. Vorrichtung zur Futterernte nach einem der vorgenannten Ansprüche **dadurch gekennzeichnet, dass** die Futtererntemaschine (1) als Selbstfahrer ausgebildet ist.

12. Vorrichtung zur Futterernte nach einem der vorgenannten Ansprüche **dadurch gekennzeichnet, dass** eine in der Position veränderbare Fahrerkabine vorgesehen ist.

13. Vorrichtung zur Futterernte nach einem der vorgenannten Ansprüche **dadurch gekennzeichnet, dass** ein Mittelträger (16) vorgesehen ist, wobei die Fahrerkabine oberhalb des Mittelträgers (16) verschiebbar ausgebildet ist.

14. Vorrichtung zur Futterernte nach einem der vorgenannten Ansprüche **dadurch gekennzeichnet, dass** eine um wenigstens 180° drehbare Fahrerkabine vorgesehen ist.

15. Vorrichtung zur Futterernte nach einem der vorgenannten Ansprüche **dadurch gekennzeichnet, dass** ein in der Position veränderbarer Triebkopf vorgesehen ist.

16. Vorrichtung zur Futterernte nach einem der vorgenannten Ansprüche, **dadurch gekennzeichnet, dass** wenigstens eine Kopplungseinheit zum Koppeln der Längenverstellung der Zugdeichsel (16) mit dem Verstellen des Rechwerkzeuges (2, 3, 4) in die Arbeitsstellung vorgesehen ist.

17. Vorrichtung zur Futterernte nach einem der vorgenannten Ansprüche, **dadurch gekennzeichnet, dass** die Kopplungseinheit derart ausgebildet ist, dass sich beim Ausschwenken wenigstens eines Trägers (17, 17') um vertikal ausgerichtete Hochachsen (22, 22') die Länge der Zugdeichsel (16) verkürzt.

18. Vorrichtung zur Futterernte nach einem der vorgenannten Ansprüche, **dadurch gekennzeichnet, dass** ein gemeinsamer Antrieb vorgesehen ist, der zumindest einen Schwenkantrieb des Trägers (17, 17') und einen Antrieb der Längenverstelleinheit der Zugdeichsel (16) umfasst.
